(19) Europäisches Patentamt
European Patent Office
Office européen des brevets

(11) **EP 4 727 193 A1**

(12) **EUROPEAN PATENT APPLICATION**
published in accordance with Art. 153(4) EPC

(43) Date of publication:
**15.04.2026 Bulletin 2026/16**

(21) Application number: **24830559.1**

(22) Date of filing: **18.06.2024**

(51) International Patent Classification (IPC):
**H04W 16/18** (2009.01)

(52) Cooperative Patent Classification (CPC):
**H04W 16/18; H04W 24/02**

(86) International application number:
**PCT/CN2024/099773**

(87) International publication number:
**WO 2025/001913 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 CN 202310770543**

(71) Applicant: **ZTE CORPORATION**
**Shenzhen, Guangdong 518057 (CN)**

(72) Inventors:
• **LUO, Feixiong**
  **Shenzhen, Guangdong 518057 (CN)**
• **HUANG, Jianguo**
  **Shenzhen, Guangdong 518057 (CN)**
• **XIA, Shuqiang**
  **Shenzhen, Guangdong 518057 (CN)**
• **LI, Junqiang**
  **Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **NETWORK PLANNING METHOD, ELECTRONIC DEVICE, AND COMPUTER-READABLE MEDIUM**

(57) A network planning method, an electronic device, and a computer-readable medium. The method comprises: determining an initial sensing pair corresponding to an uncovered region in a target region, wherein the initial sensing pair is formed by two base stations in the target region; determining a first sensing region and first sensing blind region of the initial sensing pair according to the distance between the two base stations which form the initial sensing pair; and determining a complementary sensing pair of the initial sensing pair according to the first sensing region and the first sensing blind region, so as to cover the uncovered region, wherein the complementary sensing pair is formed by two base stations in the uncovered region.

S1 Determine an initial sensing pair corresponding to an uncovered zone in a target region, with the initial sensing pair formed by two base stations in the target region

S2 Determine a first sensing area and a first sensing blind area of the initial sensing pair based on a distance between the two base stations forming the initial sensing pair

S3 Determine, based on the first sensing area and the first sensing blind area, a complementary sensing pair for the initial sensing pair, so as to cover the uncovered zone, with the complementary sensing pair formed by two base stations in the uncovered zone

FIG. 1

EP 4 727 193 A1

**Description**

CROSS REFERENCE TO RELATED APPLICATIONS

The present disclosure claims the priority to Chinese Patent Application No. 202310770543.0 entitled "NETWORK PLANNING METHOD, ELECTRONIC DEVICE, AND COMPUTER-READABLE MEDIUM" and filed with the CNIPA on June 27, 2023, the contents of which are incorporated herein by reference in their entirety.

TECHNICAL FIELD

Embodiments of the present disclosure relate to, but are not limited to, the technical field of communications, and in particular, to a network planning method, an electronic device, and a computer-readable medium.

BACKGROUND

A series of emerging technologies such as smart cities, the Internet of Vehicles, and intelligent manufacturing are gradually integrated into daily life, and propose higher requirements on end-to-end information processing capacity of wireless networks. With the development of wireless communication frequency bands towards higher frequency bands such as millimeter waves and terahertz, the wireless communication frequency bands more and more overlap with traditional radar sensing frequency bands, and wireless communication and wireless sensing show more and more similarities in system design, signal processing and Multiple-Input Multiple-Output (MIMO) antenna hardware, so that integration of mobile communication networks, sensing networks and computing networks by using the same set of hardware equipment under the same frequency spectrum becomes possible. The Integrated Sensing and Communications (ISAC) refers to the novel information processing technology which simultaneously perform a sensing function and a communication function based on sharing software and hardware resources or information, and can effectively improve spectrum efficiency, hardware efficiency, and information processing efficiency of system.

Conventional sensing methods of wireless communication such as channel estimation, user detection, and spectrum sensing belong to device-based sensing, that is, a sensing object typically carries a signal transmitter, and the sensing methods are essentially sensing signals transmitted by the object. In the ISAC, a more concerned sensing method belongs to device-free sensing, that is, sensing signals reflected by object, also known as radar sensing in traditional cognition. The device-free sensing method does not need special downlink pilot design, and a communication signal is a sensing signal; the device-free sensing method does not need uplink feedback either, and the uplink feedback is replaced with reflected echo of the sensing object; and the device-free sensing method can further achieve a high matched filtering gain.

There are mainly several modes for base stations to perform device-free sensing: a base station transmits and receives the sensing signal by itself; one base station transmits the sensing signal, and the other base station receives the sensing signal, which is also referred to as cooperative sensing; and a base station transmits the sensing signal, and a terminal receives the sensing signal. Since positions of the base stations are fixed, coverage depends on regulation and control of the sensing signal, which inevitably causes existence of a blind area. When sensing network planning is performed for a target region, differences between the different sensing modes need to be considered, so as to reduce the blind area to the greatest extent.

However, the sensing and communications integration technology for realizing the integration of the mobile communication networks, the sensing networks, and the computing networks by using the same set of hardware equipment under the same frequency spectrum is still in the technical verification stage, and there is no feasible solution to sensing network planning.

SUMMARY

The embodiments of the present disclosure provide a network planning method, an electronic device, and a computer-readable medium.

In a first aspect, an embodiment of the present disclosure provides a network planning method, including: determining an initial sensing pair corresponding to an uncovered zone in a target region, wherein the initial sensing pair is formed by two base stations in the target region; determining a first sensing area and a first sensing blind area of the initial sensing pair based on a distance between the two base stations forming the initial sensing pair; and based on the first sensing area and the first sensing blind area, determining a complementary sensing pair for the initial sensing pair, so as to cover the uncovered zone, wherein the complementary sensing pair is formed by two base stations in the uncovered zone.

In a second aspect, an embodiment of the present disclosure provides an electronic device, including: at least one processor; and a storage device having stored thereon at least one program which, when executed by the at least one processor, causes the at least one processor to implement the network planning method described in the first aspect of the embodiments of the present disclosure.

In a third aspect, the present disclosure provides a computer-readable medium having stored thereon a computer program which, when executed by a processor, implements the network planning method described in the first aspect of the present disclosure.

BRIEF DESCRIPTION OF DRAWINGS

FIG. 1 is a flowchart illustrating a network planning method according to an embodiment of the present disclosure;

FIG. 2 is a flowchart of some operations in a network planning method according to another embodiment of the present disclosure;

FIG. 3 is a schematic diagram of a two-station Doppler sensing model according to an embodiment of the present disclosure;

FIG. 4 is a schematic diagram illustrating a sensing blind area of a sensing pair according to an embodiment of the present disclosure;

FIG. 5 is a schematic diagram of an electronic device according to an embodiment of the present disclosure;

FIG. 6 is a schematic diagram of a computer-readable medium according to an embodiment of the present disclosure;

FIG. 7 is a schematic diagram of a multi-station cooperative sensing basic unit according to an embodiment of the present disclosure;

FIG. 8 is a schematic diagram of a multi-station cooperative sensing basic unit according to another embodiment of the present disclosure;

FIG. 9 is a schematic diagram of a multi-station cooperative sensing basic unit according to still another embodiment of the present disclosure;

FIG. 10 is a schematic diagram illustrating an uncovered zone according to an embodiment of the present disclosure;

FIG. 11 is a schematic diagram illustrating network planning according to an embodiment of the present disclosure; and

FIG. 12 is a schematic diagram illustrating network planning according to another embodiment of the present disclosure.

DETAIL DESCRIPTION OF EMBODIMENTS

In order to enable those of ordinary skill in the art to better understand the technical solutions of the present disclosure, a network planning method, an electronic device, and a computer-readable medium provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term "include" and/or the term "be made of" used herein indicates the presence of the described features, integers, operations, elements and/or components, but do not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In some related technologies, conventional wireless communication network planning does not take cooperative sensing into consideration; while in cooperative radar sensing, network planning is performed based on the Bistatic Radar Equation, mainly considers a distance between a transmitting station and a sensing target and a distance between a receiving station and the sensing target, but does not consider an influence of a moving speed of the sensing target, i.e., an influence of a Doppler shift, such that the network planning for cooperative radar sensing cannot be used for planning of a sensing network.

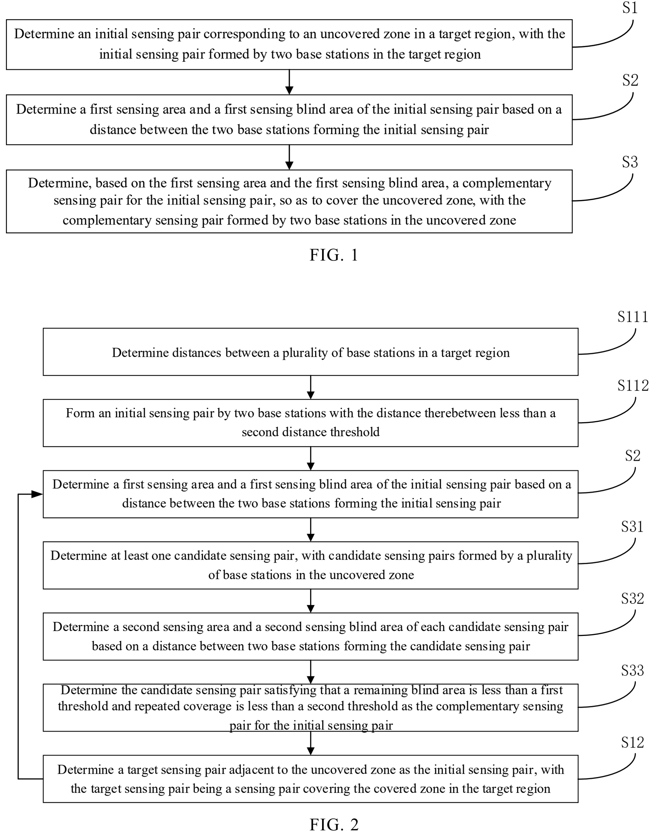

In a first aspect, referring to FIG. 1, an embodiment of the present disclosure provides a network planning method, including:

S1, determining an initial sensing pair corresponding to an uncovered zone in a target region, with the initial sensing pair formed by two base stations in the target region;

S2, determining a first sensing area and a first sensing blind area of the initial sensing pair based on a distance between the two base stations forming the initial sensing pair; and

S3, determining, based on the first sensing area and the first sensing blind area, a complementary sensing pair for the initial sensing pair, to cover the uncovered zone, with the complementary sensing pair formed by two base stations in the uncovered zone.

For the cooperative sensing mode, the embodiments of the present disclosure propose that one base station serves as a transmitting station and transmits a sensing signal, and the other base station serves as a receiving station and receives the sensing signal, thereby forming a sensing pair. The base stations forming the sensing pair serve as the receiving station and the transmitting station for each other.

In the embodiments of the present disclosure, the target region is a region which needs to be subjected to sensing network planning; the uncovered zone is a zone in the target region which is not covered by the sensing pair, and a covered zone is a zone in the target region which is covered by the sensing pair; and a union of the uncovered zone and the covered zone is the target region. In the embodiments of the present disclosure, the uncovered zone may be the entire target region or a part of the target region.

In the embodiments of the present disclosure, a sensing blind area of the sensing pair is a Doppler sensing blind area determined by considering an influence of a Doppler shift generated by movement of the sensing target. In other words, the first sensing blind area is a Doppler sensing blind area of the initial sensing pair.

In the embodiments of the present disclosure, the complementary sensing pair for the initial sensing pair is determined based on the determination of the first sensing area and the first sensing blind area of the initial sensing pair, and the initial sensing pair and the complementary sensing pair satisfy a complementary condition. The complementary condition is not particularly limited in the embodiments of the present disclosure, and the complementary condition aims to make zones covered by the initial sensing pair and the complementary sensing pair as large as possible and make uncovered sensing blind areas as small as possible. In some embodiments, the initial sensing pair and the complementary sensing pair satisfying the complementary condition refers to that a remaining blind area of the initial sensing pair and the complementary sensing pair is less than a first threshold, and repeated coverage of the initial sensing pair relative to a sensing area of the complementary sensing pair is less than a second threshold.

In the embodiments of the present disclosure, as long as the uncovered zone exists in the target region, through operations S1 to S3, the initial sensing pair can be determined first, and then the complementary sensing pair for the initial sensing pair can be determined to cover the uncovered zone until coverage of the target region is completed.

The process of completing the coverage of the target region by using the sensing pairs according to the embodiments of the present disclosure takes an influence of the sensing blind area of the sensing pair, can rapidly complete full coverage of the target region, and achieves sensing network planning based on the sensing and communications integration technology.

How to determine the complementary sensing pair for the initial sensing pair based on the determination of the first sensing area and the first sensing blind area of the initial sensing pair is not particularly limited in the embodiments of the present disclosure.

In some embodiments, when determining the complementary sensing pair for the initial sensing pair, zones covered by the initial sensing pair and the complementary sensing pair are made as large as possible, and uncovered sensing blind areas are made as small as possible. In some embodiments, the initial sensing pair and the complementary sensing pair satisfying the complementary condition refers to that a remaining blind area of the initial sensing pair and the complementary sensing pair is less than a first threshold, and repeated coverage of the initial sensing pair relative to a sensing area of the complementary sensing pair is less than a second threshold.

Accordingly, in some embodiments, referring to FIG. 2, determining the complementary sensing pair for the initial sensing pair based on the first sensing area and the first sensing blind area includes:

S31, determining at least one candidate sensing pair, with candidate sensing pairs formed by a plurality of base stations in the uncovered zone;

S32, determining a second sensing area and a second sensing blind area of a candidate sensing pair based on a distance between two base stations forming the candidate sensing pair; and

S33, determining the candidate sensing pair satisfying that a remaining blind area is less than a first threshold and repeated coverage is less than a second threshold as the complementary sensing pair for the initial sensing pair, with the remaining blind area being a union of a first remaining sub-blind area and a second remaining sub-blind area, the first remaining sub-blind area being a difference set between the first sensing blind area and the second sensing area, the second remaining sub-blind area being a difference set between the second sensing blind area and the first sensing area, and the repeated coverage being a proportion of an intersection of the first sensing area and the second sensing area to a union of the first sensing area and the second sensing area.

The first threshold and the second threshold are not particularly limited in the embodiments of the present disclosure, and may be set based on requirements of sensing network planning.

In the embodiments of the present disclosure, by determining the candidate sensing pair satisfying that the remaining blind area is less than the first threshold and the repeated coverage is less than the second threshold as the complementary sensing pair for the initial sensing pair, coverage of the sensing blind areas of the initial sensing pair and the complementary sensing pair can be ensured, and the zones covered by the initial sensing pair and the complementary sensing pair can be made as large as possible, which facilitates reducing the sensing blind areas and improving efficiency of covering the target region, thereby rapidly achieving the coverage of the target region.

In some embodiments, if none of the candidate sensing pairs and the initial sensing pair in the uncovered zone satisfies that the remaining blind area is less than the first threshold, the candidate sensing pair with the minimum remaining blind area is determined as the complementary sensing pair for the initial sensing pair, which can make the remaining blind area as small as possible.

In some embodiments, if none of the candidate sensing pairs and the initial sensing pair in the uncovered zone satisfies that the repeated coverage is less than the second threshold, the candidate sensing pair with the minimum repeated coverage is determined as the initial sensing pair, which can make the zones covered by the initial sensing pair and the complementary sensing pair as large as possible.

How to determine the candidate sensing pairs is not particularly limited in the embodiments of the present disclosure.

In some embodiments, by traversing a plurality base stations in the uncovered zone, any two base stations are grouped into a candidate sensing pair.

In some embodiments, any two base stations with the minimum distance therebetween are grouped into a candidate sensing pair based on distribution of base stations in the uncovered zone.

Accordingly, in some embodiments, determining the at least one candidate sensing pair includes:

determining distances between the plurality of base stations in the uncovered zone; and

forming the candidate sensing pair by two base stations with a distance therebetween less than a first distance threshold.

The first distance threshold is not particularly limited in the embodiments of the present disclosure. In some embodiments, the first distance threshold is determined based on the distribution of the base stations in the uncovered zone such that the distance between the two base stations forming the candidate sensing pair is the minimum.

In the embodiments of the present disclosure, a size of a sensing blind area of a sensing pair is inversely correlated with a distance between two base stations forming the sensing pair, so that the sensing blind area can be made as small as possible by forming the candidate sensing pair by the two base stations with the distance therebetween less than the first distance threshold; meanwhile, distances between all the candidate sensing pairs are relatively large, so that repeated coverage of the candidate sensing pairs relative to each other can be made as small as possible, which facilitates an improvement in coverage efficiency of the target region.

How to determine the first sensing area and the first sensing blind area of the initial sensing pair and determine the second sensing area and the second sensing blind area of the candidate sensing pair is not particularly limited in the embodiments of the present disclosure.

In some embodiments, the sensing area of the sensing pair is a Doppler sensing blind area determined by considering an influence of a Doppler shift generated by movement of the sensing target; that is, the first sensing blind area is a Doppler sensing blind area of the initial sensing pair, and the second sensing blind area is a Doppler sensing blind area of the candidate sensing pair.

In some embodiments, the sensing blind area of the sensing pair is determined by a Doppler shift of the sensing target and the distance between the base stations forming the sensing pair, and the sensing area of the sensing pair is determined by a path loss corresponding to the sensing signal.

Accordingly, in some embodiments, determining the sensing area and the sensing blind area of the sensing pair based on the distance between the two base stations forming the sensing pair includes:

determining the sensing blind area of the sensing pair based on the distance between the two base stations forming the sensing pair and a Doppler shift; and

determining the sensing area of the sensing pair based on a path loss corresponding to the sensing signal.

In the embodiments of the present disclosure, the first sensing blind area of the initial sensing pair and the second sensing blind area of the candidate sensing pair are determined based on considering the influence of the Doppler shift generated by the movement of the sensing target, so that the determined sensing blind areas are accurate, which facilitates the improvement in the coverage efficiency of the target region.

In some embodiments, determining the sensing blind area of the sensing pair based on the distance between the two base stations forming the sensing pair and the Doppler shift includes:

determining a third threshold based on the Doppler shift; and

determining, based on the distance between the two base stations forming the sensing pair, an area where a bistatic angle corresponding to the two base stations forming the sensing pair is greater than the third threshold as the sensing blind area of the sensing pair.

In some embodiments, determining the sensing area of the sensing pair based on the Doppler shift and the path loss corresponding to the sensing signal includes:

determining a fourth threshold based on the path loss corresponding to the sensing signal; and

determining an area where the bistatic angle corresponding to the two base stations forming the sensing pair is less than the third threshold and the sum of distances to the two base stations forming the sensing pair is less than the fourth threshold as the sensing area of the sensing pair.

A two-station Doppler sensing model is defined in the embodiments of the present disclosure for determining the sensing blind area and the sensing area of the sensing pair.

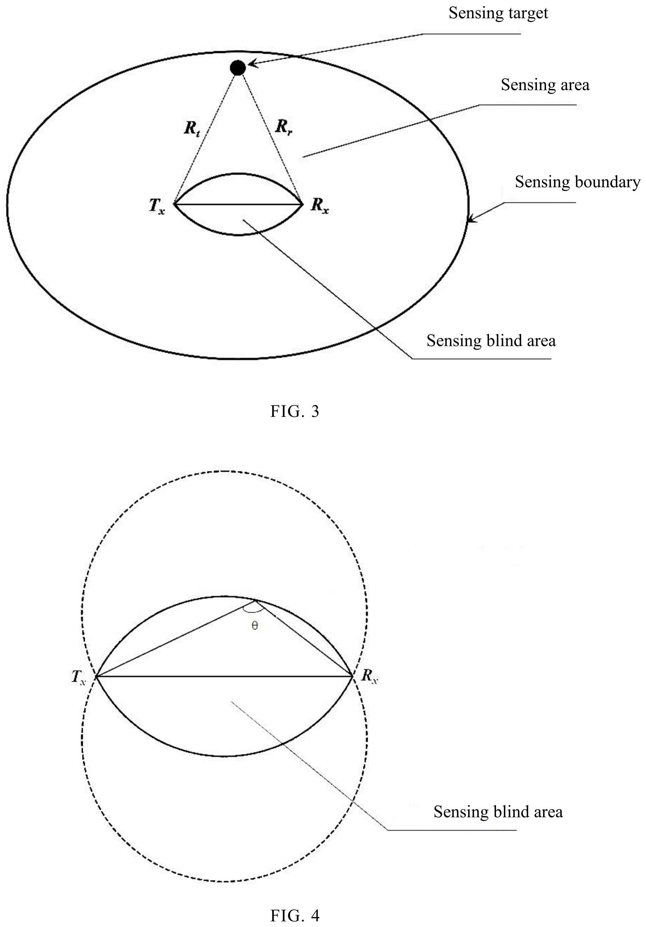

FIG. 3 shows the two-station Doppler sensing model, in which a sensing pair is formed by a transmitting station $T_x$ and a receiving station $R_x$ of a sensing signal, and a sensing blind area, a sensing area, and a sensing boundary are included.

In FIG. 3, an area where a bistatic angle corresponding to the transmitting station $T_x$ and the receiving station $R_x$ is greater than the third threshold is the sensing blind area of the sensing pair. As shown in FIG. 4, the bistatic angle refers to an included angle $\theta$ formed by a sensing target and the transmitting station $T_x$ and the receiving station $R_x$. The third threshold is determined by the following Doppler shift formula (1):

$$ f_d = \frac{v}{2\lambda} \cos \frac{\alpha}{2} \qquad\qquad (1) $$

where $f_d$ is the Doppler shift of the sensing target, $v$ is a speed of the sensing target, i.e., a radial velocity vector of the sensing target relative to the base stations, and $\lambda$ is a wavelength of the sensing signal; and when $v$ is the planned minimum sensing target speed, a value of $\alpha$ is the third threshold.

In FIG. 3, the sum of respective distances to the transmitting station $T_x$ and the receiving station $R_x$ from any point on the sensing boundary is equal to the fourth threshold. In the embodiments of the present disclosure, the fourth threshold is determined based on the path loss corresponding to the sensing signal. In some embodiments, a maximum sensing distance, i.e. the fourth threshold, is calculated based on a path loss corresponding to the minimum detectable sensing signal.

In FIG. 3, an area between the sensing blind area and the sensing boundary is the sensing area of the sensing pair, that is, the sensing area is the area where the bistatic angle is less than the third threshold and the sum of the distances to the transmitting station $T_x$ and the receiving station $R_x$ is less than the fourth threshold. For example, in FIG. 3, the distance from the sensing target in the sensing area to the transmitting station $T_x$ is $R_t$, the distance from the sensing target in the sensing area to the receiving station $R_x$ is $R_r$, $R_t+R_r$ is less than the fourth threshold, and the bistatic angle corresponding to the sensing target is less than the third threshold.

In the embodiments of the present disclosure, based on the Doppler sensing model shown in FIG. 3, the first sensing area and the first sensing blind area of the initial sensing pair can be determined and the second sensing area and the second sensing blind area of the candidate sensing pair can also be determined.

In the embodiments of the present disclosure, in an initial stage of network planning, the target region is an uncovered zone, a set of the base stations in the target region is known, any two base stations may be grouped into the initial sensing pair, and the complementary sensing pair for the initial sensing pair may be determined. In a case where the coverage of the target region is not completed, that is, the uncovered zone exists in the target region, a sensing pair in the covered zone is determined as a new initial sensing pair, and a complementary sensing pair is further determined for the new initial sensing pair; and the above process is repeated until the coverage of the target region is completed.

Accordingly, in some embodiments, referring to FIG. 2, determining the initial sensing pair corresponding to the uncovered zone in the target region includes:

S111, determining distances between a plurality of base stations in the target region; and
S112, forming the initial sensing pair by the two base stations with the distance therebetween less than a second distance threshold.

The second distance threshold is not particularly limited in the embodiments of the present disclosure. In some embodiments, the second distance threshold is determined based on distribution of the base stations in the target region such that the distance between the two base stations forming the initial sensing pair is the minimum.

In the embodiments of the present disclosure, since the size of the sensing blind area of the sensing pair is inversely correlated with the distance between two base stations forming the sensing pair, the sensing blind area of the initial sensing pair can be made as small as possible by forming the initial sensing pair by the two base stations with the distance therebetween less than the second distance threshold, which facilitates the improvement in the coverage efficiency of the target region.

In some embodiments, referring to FIG. 2, determining the initial sensing pair corresponding to the uncovered zone in the target region includes:

S12, determining a target sensing pair adjacent to the uncovered zone as the initial sensing pair, with the target sensing pair being a sensing pair covering the covered zone in the target region.

In the embodiments of the present disclosure, the target sensing pair adjacent to the uncovered zone refers to the sensing pair having a sensing area adjacent to the uncovered zone.

In the embodiments of the present disclosure, in the presence of the uncovered zone, operation S12 is repeatedly performed to determine a new initial sensing pair, and then a complementary sensing pair is determined for the new initial sensing pair by performing operations S2 and S3 until the coverage of the target region is completed.

In some embodiments, before determining the initial sensing pair corresponding to the uncovered zone in the target region, the network planning method further includes:

determining the uncovered zone based on the target region and the covered zone; and
performing, in a case where area of the uncovered zone exceeds a fifth threshold, the operation of determining the initial sensing pair corresponding to the uncovered zone in the target region.

In some embodiments, if the area of the uncovered zone does not exceed the fifth threshold, it is indicated that the coverage of the target region is completed.

In some embodiments, in a case where the area of the uncovered zone exceeds the fifth threshold, after determining the uncovered zone based on the target region and the covered zone, the network planning method further includes:

determining a base station set corresponding to the uncovered zone, with the base station set including a plurality of base stations in the uncovered zone.

With the network planning method according to the embodiments of the present disclosure, the initial sensing pair is formed by the two base stations in the target region, and the complementary sensing pair for the initial sensing pair is determined based on the determination of the sensing area and the sensing blind area of the initial sensing pair to cover the uncovered zone in the target region, and in a case where the uncovered zone exists in the target region, the network planning method can be repeatedly performed until the coverage of the target region is completed. The above process of completing the coverage of the target region by using the sensing pairs takes the influence of the sensing blind area of the sensing pair, can rapidly complete full coverage of the target region, and achieves sensing network planning based on the sensing and communications integration technology.

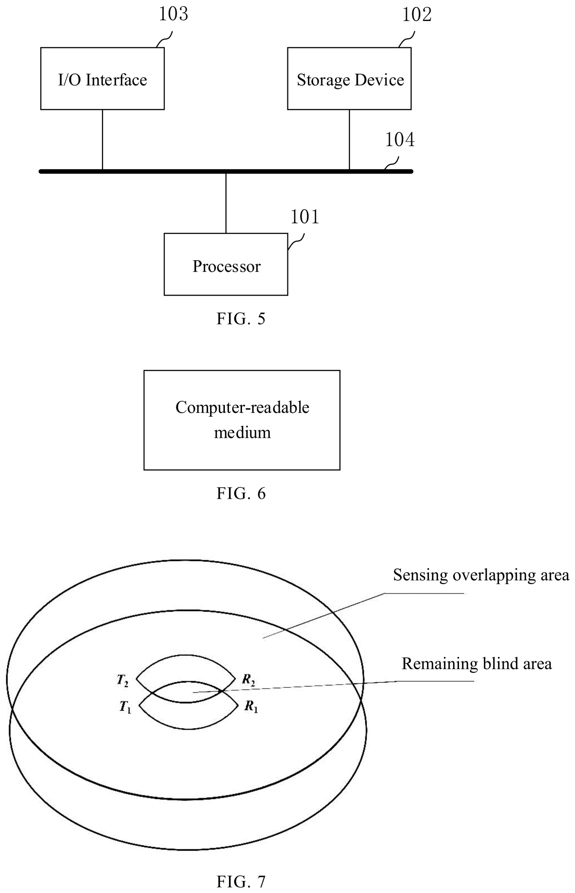

In a second aspect, referring to FIG. 5, an embodiment of the present disclosure provides an electronic device, including:

at least one processor 101;
a storage device 102 having stored thereon at least one program which, when executed by the at least one processor, causes the at least one processor to implement the network planning method described in the first aspect of the embodiments of the present disclosure; and
at least one input/output (I/O) interface 103 connected between the at least one processor and the storage device and configured to enable information interaction between the at least one processor and the storage device.

The processor 101 is a device having a data processing capability, and includes, but is not limited to, a Central Processing Unit (CPU); the storage device 102 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write interface) 103 is connected between the processor 101 and the storage device 102, is capable of enabling the information interaction between the processor 101 and the storage device 102, and includes, but is not limited to, a data bus (Bus).

In some embodiments, the processor 101, the storage device 102, and the I/O interface 103 are connected to each other through a bus 104, and then are connected to other components of a computing device.

In a third aspect, referring to FIG. 6, an embodiment of the present disclosure provides a computer-readable medium having stored thereon a computer program which, when executed by a processor, implements the network planning method described in the first aspect of the embodiments of the present disclosure.

In order to enable those of ordinary skill in the art to understand the technical solutions according to the embodiments of the present disclosure more clearly, the technical solutions according to the embodiments of the present disclosure are illustrated in detail below by specific embodiments.

Embodiment One

As shown in FIG. 3, the two-station Doppler sensing model is defined in the present embodiment for determining the sensing blind area and the sensing area of the sensing pair.

As shown in FIG. 3, in the two-station Doppler sensing model, the sensing pair is formed by the transmitting station $T_x$ and the receiving station $R_x$ of the sensing signal, and the sensing blind area, the sensing area, and the sensing boundary are included.

In FIG. 3, the area where the bistatic angle corresponding to the transmitting station $T_x$ and the receiving station $R_x$ is greater than the third threshold is the sensing blind area of the sensing pair. As shown in FIG. 4, the bistatic angle refers to the included angle $\theta$ formed by the sensing target and the transmitting station $T_x$ and the receiving station $R_x$. The third threshold is determined by the following Doppler shift formula (2):

$$ f_d = \frac{v}{2\lambda} \cos \frac{\alpha}{2} \qquad (2) $$

where $f_d$ is the Doppler shift of the sensing target, v is the speed of the sensing target, i.e., the radial velocity vector of the sensing target relative to the base stations, and $\lambda$ is the wavelength of the sensing signal; and when v is the planned minimum sensing target speed, the value of $\alpha$ is the third threshold.

In FIG. 3, the sum of the respective distances to the transmitting station $T_x$ and the receiving station $R_x$ from any point on the sensing boundary is equal to the fourth threshold. In the embodiments of the present disclosure, the fourth threshold is determined based on the path loss corresponding to the sensing signal. In some embodiments, the maximum sensing distance, i.e. the fourth threshold, is calculated based on the path loss corresponding to the minimum detectable sensing signal.

In FIG. 3, the area between the sensing blind area and the sensing boundary is the sensing area of the sensing pair, that is, the sensing area is the area where the bistatic angle is less than the third threshold and the sum of the distances to the transmitting station $T_x$ and the receiving station $R_x$ is less than the fourth threshold.

In the present embodiment, the process of completing the coverage of the target region based on the two-station Doppler sensing model shown in FIG. 3 is as follows.

(1) For the base station set of the target region, a multi-station cooperative sensing basic unit is determined based on the two-station Doppler sensing model.

In the present embodiment, the target region is a region planned for sensing coverage.

The multi-station cooperative sensing basic unit includes two sensing pairs. For the base station set of the target region, as shown in FIG. 7, FIG. 8, and FIG. 9, a sensing pair formed by two base stations $T_1$ and $R_1$ with the minimum distance therebetween is selected as the initial sensing pair; and a candidate sensing pair set formed by the remaining base stations in the base station set is traversed, a candidate sensing pair formed by two base stations $T_2$ and $R_2$ is selected as the complementary sensing pair for the initial sensing pair, the complementary sensing pair and the initial sensing pair form the multi-station cooperative sensing basic unit, and the remaining blind area of the multi-station cooperative sensing basic unit is less than the first threshold, which is determined by planning.

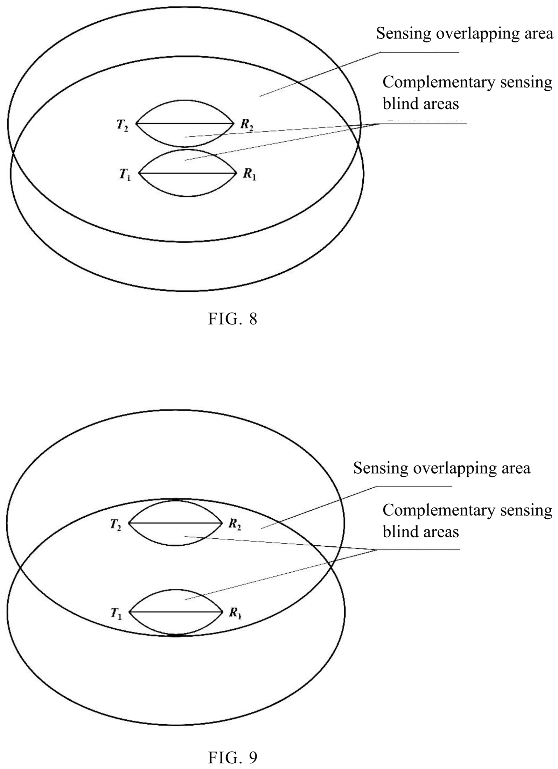

The remaining blind area of the multi-station cooperative sensing basic unit is the union of the first remaining sub-blind area and the second remaining sub-blind area, the first remaining sub-blind area is the difference set between the sensing blind area of the initial sensing pair and the sensing area of the complementary sensing pair, and the second remaining sub-blind area is the difference set between the sensing blind area of the complementary sensing pair and the sensing area of the initial sensing pair. FIG. 7 is a schematic diagram illustrating a case where the remaining blind area is greater than the first threshold, and FIG. 8 is a schematic diagram illustrating a case where the remaining blind area is less than the first threshold.

In the present embodiment, the repeated coverage of the sensing areas of the initial sensing pair and the complementary sensing pair forming the multi-station cooperative sensing basic unit needs to be less than the second threshold, which is determined by planning. The repeated coverage of the sensing areas of the initial sensing pair and the complementary sensing pair is a proportion of an overlapping part of the sensing areas of the initial sensing pair and the complementary sensing pair to the sensing areas. FIG. 9 is a schematic diagram illustrating a case where the repeated coverage of the sensing areas of the initial sensing pair and the complementary sensing pair is less than the second threshold.

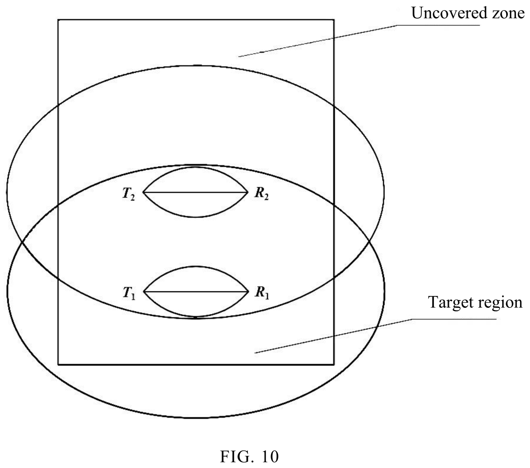

(2) The uncovered zone in the target region is calculated, a new initial sensing pair is determined, the base stations in the uncovered zone are selected to form a new complementary sensing pair, and coverage of the uncovered zone is performed. FIG. 10 is a schematic diagram of the uncovered zone.

(3) In a case where the uncovered zone exists in the target region, (2) is repeatedly performed until the coverage of the target region is completed.

Embodiment Two

The present embodiment is based on the two-station Doppler sensing model illustrated in the Embodiment One.

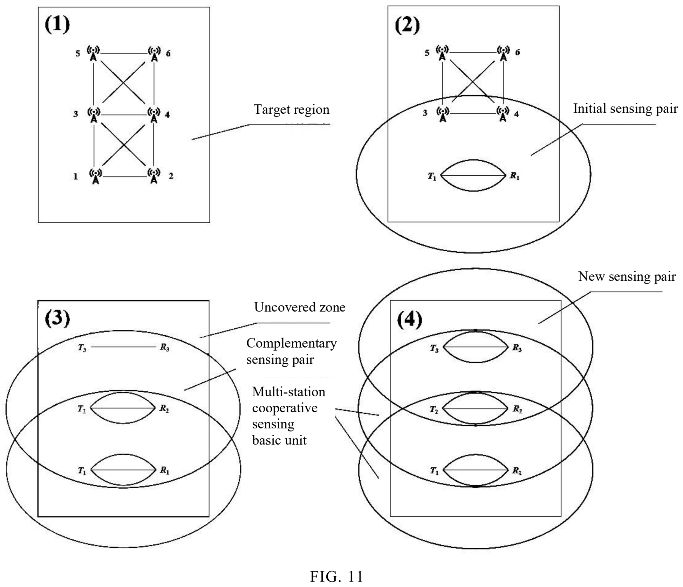

As shown in FIG. 11, the target region includes base station 1, base station 2, base station 3, base station 4, base station 5, and base station 6. As shown in (1) of FIG. 11, the distances between the base stations satisfy $L_{12}=L_{34}=L_{56}<L_{13}=L_{24}=L_{35}=L_{46}<L_{14}=L_{23}=L_{36}=L_{45}$, where $L_{12}$ represents the distance between the base station 1 and the base station 2.

In the present embodiment, the two base stations with the minimum distance therebetween are grouped into a sensing pair. For example, the base station 1 and the base station 2 form a sensing pair $T_1$-$R_1$, the base station 3 and the base station 4 form a sensing pair $T_2$-$R_2$, and the base station 5 and the base station 6 form a sensing pair $T_3$-$R_3$. When two adjacent sensing pairs form a multi-station cooperative sensing basic unit, the remaining blind area is less than the first threshold, and the repeated coverage of the sensing areas is less than the second threshold. A process of performing sensing network planning optimization by sensing and communications integration on the target region is as follows.

Operation 1, the target region and the base station set of the target region are known.

Operation 2, for the base station set of the target region, based on the two-station Doppler sensing model, as shown in (2) of FIG. 11, the base station 1 and the base station 2 with the minimum distance therebetween are selected to form the initial sensing pair $T_1$-$R_1$.

Operation 3, the complementary sensing pair is selected. As shown in (3) of FIG. 11, with the distance between any two base stations known, the sensing pairs formed by the remaining base stations in the base station set are traversed, and the base station 3 and the base station 4 are selected to form the complementary sensing pair $T_2$-$R_2$; and the remaining blind area of the initial sensing pair $T_1$-$R_1$ and the complementary sensing pair $T_2$-$R_2$ is less than the first threshold, and the repeated coverage of the sensing areas is less than the second threshold. Thus, the initial sensing pair $T_1$-$R_1$ and the complementary sensing pair $T_2$-$R_2$ form the multi-station cooperative sensing basic unit.

Operation 4, the uncovered zone is calculated, and the base station set of the uncovered zone is determined. As shown in (3) of FIG. 11, the target region is not completely covered, and the base station set of the uncovered zone includes the base station 5 and the base station 6.

Operation 5, a new initial sensing pair is determined. The sensing pair $T_2$-$R_2$ adjacent to the uncovered zone is selected as the new initial sensing pair.

Operation 6, a new complementary sensing pair is selected. As shown in (4) of FIG. 11, the sensing pairs formed by the remaining base stations in the base station set are traversed, the base station 5 and the base station 6 are selected to form the new complementary sensing pair $T_3$-$R_3$ to complete the coverage of the uncovered zone, thereby completing the coverage of the target region.

In the present embodiment, the sensing pair $T_1$-$R_1$, the sensing pair $T_2$-$R_2$, and the sensing pair $T_3$-$R_3$ form a sensing-communications integrated sensing system for the target region.

Embodiment Three

The present embodiment is based on the two-station Doppler sensing model illustrated in the Embodiment One.

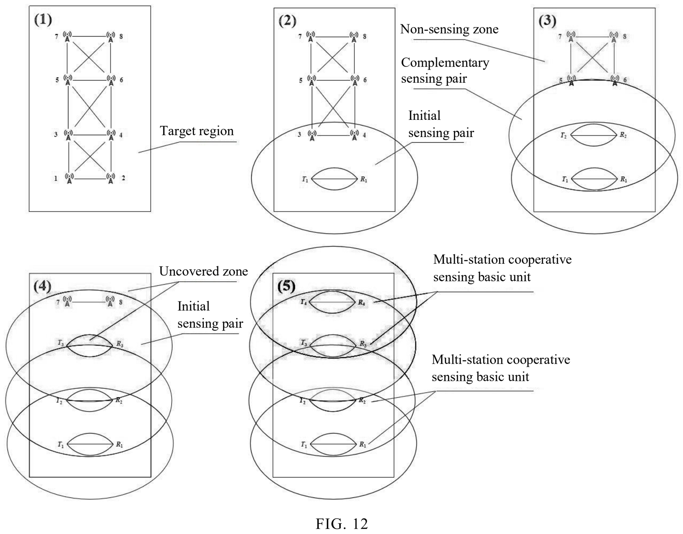

As shown in FIG. 12, the target region includes base station 1, base station 2, base station 3, base station 4, base station 5, base station 6, base station 7, and base station 8. As shown in (1) of FIG. 12, the distances between the base stations satisfy $L_{12}=L_{34}=L_{56}=L_{78}<L_{13}=L_{24}=L_{57}=L_{68}<L_{14}=L_{23}=L_{58}=L_{67}<L_{35}=L_{46}<L_{36}=L_{45}$, where $L_{12}$ represents the distance between the base station 1 and the base station 2.

In the present embodiment, the two base stations with the minimum distance therebetween are grouped into a sensing pair. For example, the base station 1 and the base station 2 form a sensing pair $T_1$-$R_1$, the base station 3 and the base station 4 form a sensing pair $T_2$-$R_2$, the base station 5 and the base station 6 form a sensing pair $T_3$-$R_3$, and the base station 7 and the base station 8 form a sensing pair $T_4$-$R_4$. When two adjacent sensing pairs form a multi-station cooperative sensing basic unit, the remaining blind area is less than the first threshold, and the repeated coverage of the sensing areas is less than the second threshold. A process of performing sensing network planning optimization by sensing and communications integration on the target region is as follows.

Operation 1, the target region and the base station set of the target region are known.

Operation 2, for the base station set of the target region, based on the two-station Doppler sensing model, as shown in (2) of FIG. 12, the base station 1 and the base station 2 with the minimum distance therebetween are selected to form the initial sensing pair $T_1$-$R_1$.

Operation 3, the complementary sensing pair is selected. As shown in (3) of FIG. 12, with the distance between any two base stations known, the sensing pairs formed by the remaining base stations in the base station set are traversed, and the base station 3 and the base station 4 are selected to form the complementary sensing pair $T_2$-$R_2$; and the remaining blind area of the initial sensing pair $T_1$-$R_1$ and the complementary sensing pair $T_2$-$R_2$ is less than the first threshold, and the repeated coverage of the sensing areas is less than the second threshold. Thus, the initial sensing pair $T_1$-$R_1$ and the complementary sensing pair $T_2$-$R_2$ form the multi-station cooperative sensing basic unit.

Operation 4, the uncovered zone is calculated, and the base station set of the uncovered zone is determined. As shown in (3) of FIG. 12, the target region is not completely covered, and the base station set of the uncovered zone includes the base station 5, the base station 6, the base station 7, and the base station 8.

Operation 5, a new initial sensing pair is determined. The sensing pair $T_2$-$R_2$ adjacent to the uncovered zone is selected as the new initial sensing pair; as shown in (4) of FIG. 12, the sensing pairs formed by the remaining base stations in the base station set are traversed, the base station 5 and the base station 6 are selected to form a new complementary sensing pair $T_3$-$R_3$ to complete the coverage of the uncovered zone; when a new uncovered zone still exists and does not satisfy the fifth threshold, the sensing pair $T_3$-$R_3$ adjacent to the uncovered zone is selected as a new initial sensing pair.

Operation 6, a new complementary sensing pair is selected. As shown in (5) of FIG. 12, the base station 7 and the base station 8 are selected to form a complementary sensing pair $T_4$-$R_4$ for the sensing pair $T_3$-$R_3$, and the sensing pair $T_3$-$R_3$ and the sensing pair $T_4$-$R_4$ form a new multi-station cooperative sensing basic unit. The 8 base stations in the target region form a sensing-communications integrated sensing system for the target region, and full coverage of the target region is completed by the two multi-station cooperative sensing basic units.

It should be understood by those of ordinary skill in the art that the functional modules/units in all or some of the operations, the systems, and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

**Claims**

1. A network planning method, comprising:

   determining an initial sensing pair corresponding to an uncovered zone in a target region, wherein the initial sensing pair is formed by two base stations in the target region;
   determining a first sensing area and a first sensing blind area of the initial sensing pair based on a distance between the two base stations forming the initial sensing pair; and
   determining a complementary sensing pair for the initial sensing pair based on the first sensing area and the first sensing blind area, so as to cover the uncovered zone, wherein the complementary sensing pair is formed by two base stations in the uncovered zone.

2. The network planning method of claim 1, wherein determining the complementary sensing pair for the initial sensing pair based on the first sensing area and the first sensing blind area comprises:

   determining at least one candidate sensing pair, wherein candidate sensing pairs are formed by a plurality of base stations in the uncovered zone;
   determining a second sensing area and a second sensing blind area of a candidate sensing pair based on a distance between two base stations forming the candidate sensing pair; and
   determining the candidate sensing pair satisfying that a remaining blind area is less than a first threshold and repeated coverage is less than a second threshold as the complementary sensing pair for the initial sensing pair, wherein the remaining blind area is a union of a first remaining sub-blind area and a second remaining sub-blind area, the first remaining sub-blind area is a difference set between the first sensing blind area and the second sensing area, the second remaining sub-blind area is a difference set between the second sensing blind area and the first sensing area, and the repeated coverage is a proportion of an intersection of the first sensing area and the second sensing area to a union of the first sensing area and the second sensing area.

3. The network planning method of claim 2, wherein determining the at least one candidate sensing pair comprises:

   determining distances between the plurality of base stations in the uncovered zone; and
   forming the at least one candidate sensing pair by two base stations with a distance therebetween less than a first distance threshold.

4. The network planning method of any one of claims 1 to 3, wherein determining the sensing area and the sensing blind area of the sensing pair based on the distance between the two base stations forming the sensing pair comprises:

   determining the sensing blind area of the sensing pair based on a distance between the two base stations forming the sensing pair and a Doppler shift; and
   determining the sensing area of the sensing pair based on a path loss corresponding to a sensing signal.

5. The network planning method of claim 4, wherein determining the sensing blind area of the sensing pair based on the distance between the two base stations forming the sensing pair and the Doppler shift comprises:

   determining a third threshold based on the Doppler shift; and
   determining, based on the distance between the two base stations forming the sensing pair, an area where a bistatic angle corresponding to the two base stations forming the sensing pair is greater than the third threshold as the sensing blind area of the sensing pair.

6. The network planning method of claim 5, wherein determining the sensing area of the sensing pair based on the Doppler shift and the path loss corresponding to the sensing signal comprises:

   determining a fourth threshold based on the path loss corresponding to the sensing signal; and
   determining an area where the bistatic angle corresponding to the two base stations forming the sensing pair is less than the third threshold and a sum of distances to the two base stations forming the sensing pair is less than the fourth threshold as the sensing area of the sensing pair.

7. The network planning method of any one of claims 1 to 3, wherein determining the initial sensing pair corresponding to the uncovered zone in the target region comprises:

    determining distances between a plurality of base stations in the target region; and
    forming the initial sensing pair by the two base stations with a distance therebetween less than a second distance threshold.

8. The network planning method of any one of claims 1 to 3, wherein determining the initial sensing pair corresponding to the uncovered zone in the target region comprises:
    determining a target sensing pair adjacent to the uncovered zone as the initial sensing pair, wherein the target sensing pair is a sensing pair covering a covered zone in the target region.

9. The network planning method of claim 8, wherein before determining the initial sensing pair corresponding to the uncovered zone in the target region, the network planning method further comprises:

    determining the uncovered zone based on the target region and the covered zone; and
    performing, in a case where area of the uncovered zone exceeds a fifth threshold, the operation of determining the initial sensing pair corresponding to the uncovered zone in the target region.

10. The network planning method of claim 9, wherein in a case where the area of the uncovered zone exceeds the fifth threshold and after determining the uncovered zone based on the target region and the covered zone, the network planning method further comprises:
    determining a base station set corresponding to the uncovered zone, wherein the base station set includes a plurality of base stations in the uncovered zone.

11. An electronic device, comprising:

    at least one processor; and
    a storage device having stored thereon at least one program which, when executed by the at least one processor, causes the at least one processor to implement the network planning method of any one of claims 1 to 10.

12. A computer-readable medium having stored thereon a computer program which, when executed by a processor, implements the network planning method of any one of claims 1 to 10.

S1

Determine an initial sensing pair corresponding to an uncovered zone in a target region, with the initial sensing pair formed by two base stations in the target region

S2

Determine a first sensing area and a first sensing blind area of the initial sensing pair based on a distance between the two base stations forming the initial sensing pair

S3

Determine, based on the first sensing area and the first sensing blind area, a complementary sensing pair for the initial sensing pair, so as to cover the uncovered zone, with the complementary sensing pair formed by two base stations in the uncovered zone

FIG. 1

S111

Determine distances between a plurality of base stations in a target region

S112

Form an initial sensing pair by two base stations with the distance therebetween less than a second distance threshold

S2

Determine a first sensing area and a first sensing blind area of the initial sensing pair based on a distance between the two base stations forming the initial sensing pair

S31

Determine at least one candidate sensing pair, with candidate sensing pairs formed by a plurality of base stations in the uncovered zone

S32

Determine a second sensing area and a second sensing blind area of each candidate sensing pair based on a distance between two base stations forming the candidate sensing pair

S33

Determine the candidate sensing pair satisfying that a remaining blind area is less than a first threshold and repeated coverage is less than a second threshold as the complementary sensing pair for the initial sensing pair

S12

Determine a target sensing pair adjacent to the uncovered zone as the initial sensing pair, with the target sensing pair being a sensing pair covering the covered zone in the target region

FIG. 2

Sensing target

Sensing area

Sensing boundary

Sensing blind area

$R_t$    $R_r$

$T_x$    $R_x$

FIG. 3

θ

$T_x$    $R_x$

Sensing blind area

FIG. 4

103

102

I/O Interface

Storage Device

104

101

Processor

FIG. 5

Computer-readable
medium

FIG. 6

Sensing overlapping area

Remaining blind area

$T_2$

$R_2$

$T_1$

$R_1$

FIG. 7

Sensing overlapping area

Complementary sensing
blind areas

$T_2$  $R_2$

$T_1$  $R_1$

FIG. 8

Sensing overlapping area

Complementary sensing
blind areas

$T_2$  $R_2$

$T_1$  $R_1$

FIG. 9

FIG. 10

FIG. 11

FIG. 12

## INTERNATIONAL SEARCH REPORT

| International application No. |
|---|
| **PCT/CN2024/099773** |

**A.    CLASSIFICATION OF SUBJECT MATTER**

H04W16/18(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

EPTXT; USTXT; VEN; WOTXT; CNABS; CNTXT; CNKI; 3GPP; IEEE: 网络, 规划, 覆盖, 补充, 互补, 基站, 距离, 添加, 位置, 新增, 增补, 增加, 站点, network planning, base station, site, distance, coverage, location, perception, position, sensing

**C.    DOCUMENTS CONSIDERED TO BE RELEVANT**

| Category* | Citation of document, with indication, where appropriate, of the relevant passages | Relevant to claim No. |
|---|---|---|
| A | CN 107682867 A (JIAXING POWER SUPPLY COMPANY OF STATE GRID ZHEJIANG ELECTRIC POWER CO. et al.) 09 February 2018 (2018-02-09) description, paragraphs [0002]-[0023] | 1-12 |
| A | CN 106211189 A (YANCHENG INSTITUTE OF TECHNOLOGY) 07 December 2016 (2016-12-07) entire document | 1-12 |
| A | CN 106937296 A (CHINA MOBILE GROUP BEIJING CO., LTD.) 07 July 2017 (2017-07-07) entire document | 1-12 |
| A | WO 2022160966 A1 (HUAWEI TECHNOLOGIES CO., LTD.) 04 August 2022 (2022-08-04) entire document | 1-12 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 September 2024** | **02 October 2024** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099773**

| Patent document cited in search report | | | Publication date (day/month/year) | Patent family member(s) | | | Publication date (day/month/year) |
|---|---|---|---|---|---|---|---|
| CN | 107682867 | A | 09 February 2018 | None | | | |
| CN | 106211189 | A | 07 December 2016 | None | | | |
| CN | 106937296 | A | 07 July 2017 | None | | | |
| WO | 2022160966 | A1 | 04 August 2022 | US | 2024118375 | A1 | 11 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310770543